# EUROPEAN PATENT APPLICATION

(11) **EP 3 457 127 A1**
(43) Date of publication of application: **20.03.2019**
(21) Application number: 18161962.8
(22) Date of filing: 15.03.2018
(51) Int. Cl.: G01N 29/032, G01N 29/34, G01N 29/44, G01F 23/296

(54) **REFLECTION WAVE SENSOR AND DETECTION METHOD**

(30) Priority: 13.09.2017 JP 2017175718
(71) Applicant: Kabushiki Kaisha Toshiba, Minato-ku, Tokyo (JP)
(72) Inventor: Takayama, Satoshi, Tokyo (JP); Yamamoto, Noriko, Tokyo (JP); Itsumi, Kazuhiro, Tokyo (JP); Hirao, Akiko, Tokyo (JP); Ono, Tomio, Kanagawa (JP)
(74) Representative: Hoffmann Eitle

(57) **Abstract**

According to one embodiment, a sensor includes a transmission/reception device and a processing device. The transmission/reception device is configured to emit a pulse wave having a first frequency toward liquid in a container, to receive a reflection wave of the pulse wave, and to output a first signal. The container includes a part in contact with the liquid. The processing device is capable of outputting strength of a first frequency reflection wave of a first frequency band contained in a second signal and strength of a second frequency reflection wave of a second frequency band contained in a third signal. The third signal is obtained by squaring the second signal. The second signal is obtained by subtracting a fourth signal from the first signal. The fourth signal is obtained by integrating the first signal. The first frequency band includes the first frequency.

## Description

### FIELD

Embodiments described herein relate generally to a sensor and a detection method.

### BACKGROUND

There is known a sensor by which the position of the surface of liquid inside a container is detected from outside the container. It is desired that this sensor perform the detection with high accuracy.

### BRIEF DESCRIPTION OF THE DRAWINGS

FIG. 1 is a schematic view showing the configuration of a sensor according to a first embodiment;
FIG. 2 is a sectional view showing a usage example of the sensor according to the first embodiment;
FIGS. 3 and 4 are graphs illustrating a signal processed by the sensor according to the first embodiment;
FIG. 5 is a schematic view showing the configuration of an alternative sensor according to the first embodiment;
FIG. 6 is a flow chart showing a detection method according to the first embodiment;
FIGS. 7A and 7B are sectional views showing an alternative usage example of the sensor according to the first embodiment;
FIGS. 8 and 9 are graphs illustrating an alternative signal processed by the sensor according to the first embodiment;
FIG. 10 is a schematic view illustrating the configuration of a sensor according to a second embodiment;
FIGS. 11A, 11B, 12A, and 12B are graphs illustrating signals processed by the sensor according to the second embodiment;
FIG. 13 is a schematic view illustrating the configuration of a sensor according to a third embodiment;
FIGS. 14A, 14B, 15A, and 15B are graphs illustrating signals processed by the sensor according to the third embodiment;
FIG. 16 is a schematic view showing the configuration of an alternative sensor according to the third embodiment;
FIG. 17 is a schematic view showing the configuration of an alternative sensor according to the third embodiment; and
FIG. 18 is a sectional view showing a sensor according to a fourth embodiment.

### DETAILED DESCRIPTION

According to one embodiment, a sensor includes a transmission/reception device and a processing device. The transmission/reception device is configured to emit a pulse wave having a first frequency toward liquid in a container, to receive a reflection wave of the pulse wave, and to output a first signal. The container includes a part in contact with the liquid. The pulse wave is incident on the part. The processing device is capable of outputting strength of a first frequency reflection wave of a first frequency band contained in a second signal and strength of a second frequency reflection wave of a second frequency band contained in a third signal. The third signal is obtained by squaring the second signal. The second signal is obtained by subtracting a fourth signal from the first signal. The fourth signal is obtained by integrating the first signal. The first frequency band includes the first frequency. The second frequency band is lower than the first frequency band.

Embodiments of the invention will now be described with reference to the drawings.

The drawings are schematic or conceptual; and the relationships between the thicknesses and widths of portions, the proportions of sizes between portions, etc., are not necessarily the same as the actual values thereof. The dimensions and/or the proportions may be illustrated differently between the drawings, even in the case where the same portion is illustrated.

In the drawings and the specification of the application, components similar to those described therein above are marked with like reference numerals, and a detailed description is omitted as appropriate.

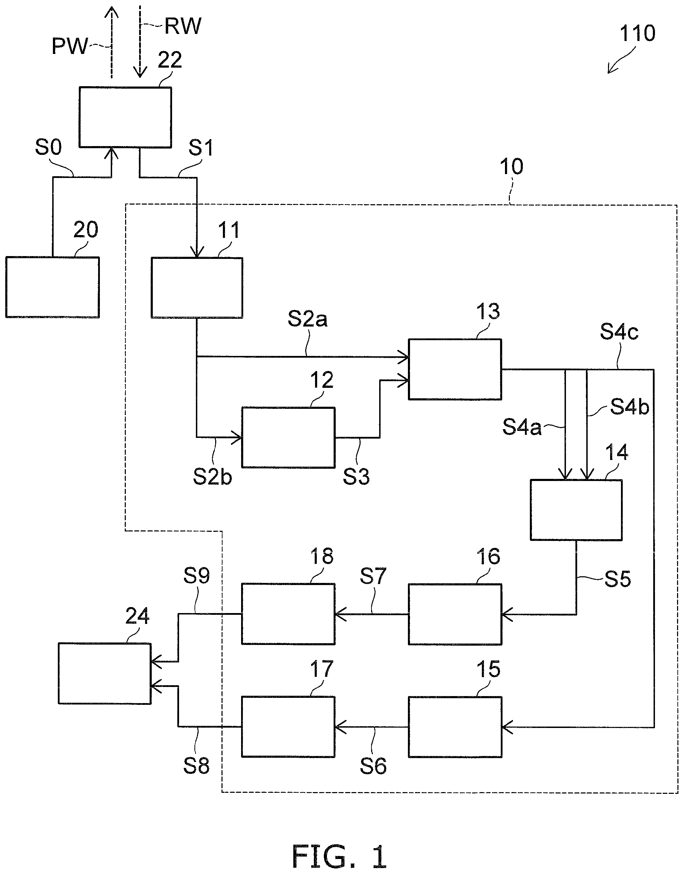

FIG. 1 is a schematic view showing the configuration of a sensor according to a first embodiment.

As shown in FIG. 1, the sensor 110 includes a processing device 10, a transmission circuit 20, a transmission/reception device 22, and a display device 24. The processing device 10 includes e.g. a reception amplifier 11, an analog integration circuit 12, a differential amplifier 13, an analog integrated circuit 14, a first band-pass filter 15, a second band-pass filter 16, a first conversion section 17, and a second conversion section 18.

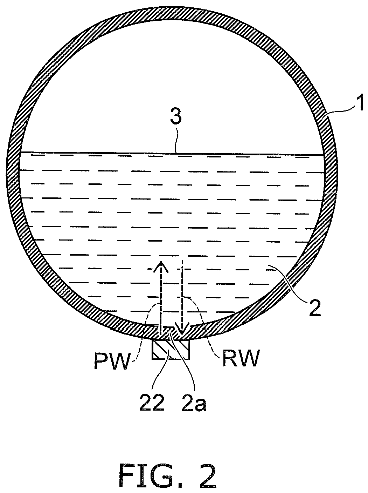

FIG. 2 is a sectional view showing a usage example of the sensor according to the first embodiment.

As shown in FIG. 2, the transmission/reception device 22 is attached to part of the outer wall of a container 1. The container 1 contains liquid 2. The container 1 includes a portion 2a in contact with the liquid 2.

The transmission circuit 20 transmits a driving signal (e.g. sinusoidal signal) S0 toward the transmission/reception device 22. The transmission/reception device 22 is driven by the driving signal S0 and emits a pulse wave PW toward the liquid surface 3 (the surface of the liquid 2). The pulse wave PW is incident on the part 2a. The pulse wave PW has a first frequency. The pulse wave PW is e.g. an ultrasonic wave. The pulse wave PW is multiply reflected by the part 2a. Part of the multiply-reflected pulse wave PW is incident on the transmission/reception device 22. Part of the multiply-reflected pulse wave PW propagates toward the liquid surface 3. The aforementioned part of the pulse wave PW reflected by the liquid surface 3 propagates as a reflection wave RW toward the part 2a. The reflection wave RW is again multiply reflected by the part 2a and incident on the transmission/reception device 22. The transmission/reception device 22 converts the reflection wave RW to an electrical signal S1. The transmission/reception device 22 is e.g. a transducer.

The signal S1 is inputted to the reception amplifier 11. The reception amplifier 11 amplifies the signal S1 and adjusts the impedance. The amplified signal is branched into a signal S2a and a signal S2b. The signal S2b is inputted to the analog integration circuit 12. The signal S3 outputted from the analog integration circuit 12 corresponds to the base level potential (DC component) of the signal S2a or S2b.

The signal S2a is inputted to a first input terminal of the differential amplifier 13. The signal S3 outputted from the analog integration circuit 12 is inputted to a second input terminal of the differential amplifier 13. Thus, the DC component and the low-frequency component are removed from the signal S2a.

The output of the differential amplifier 13 is branched into signals S4a, S4b, and S4c. The signals S4a, S4b, and S4c correspond to the AC component of the signal S2a or S2b. The signals S4a and S4b are inputted to the analog integrated circuit 14. The signal S5 outputted from the analog integrated circuit 14 corresponds to the square of the AC component of the signal S2a or S2b. Thus, the frequency of the AC component contained in the signal S5 is made twice the frequency of the AC component contained in the signal S2a.

The signal S4c is inputted to the first band-pass filter 15. The first band-pass filter 15 passes the signal S6 of a first frequency band contained in the signal S4c. The first frequency band includes the first frequency of the pulse wave transmitted from the transmission/reception device 22.

The signal S5 is inputted to the second band-pass filter 16. The second band-pass filter 16 passes the signal S7 of a second frequency band contained in the signal S5. The second frequency band includes a second frequency. The second frequency is twice the frequency of the multiply-reflected wave.

The processing device 10 outputs the strength of the first frequency reflection wave of the first frequency band contained in the signal S4c and the strength of the second frequency reflection wave of the second frequency band contained in the signal S5. The processing device 10 may output the temporal change of the strength of the first frequency reflection wave and the temporal change of the strength of the second frequency reflection wave.

The signal S6 is inputted to the first conversion section 17. The first conversion section 17 converts the analog signal S6 to a digital signal S8. The signal S7 is inputted to the second conversion section 18. The second conversion section 18 converts the analog signal S7 to a digital signal S9.

That is, the processing device 10 can output the strength of the first frequency reflection wave of the first frequency band contained in the signal S4c and the strength of the second frequency reflection wave of the second frequency band contained in the signal S5. The signal S5 is obtained by multiplying the signal S4a by S4b. The signal S4a is obtained by subtracting the signal S3 from the signal S2a. The signal S3 is obtained by integrating the signal S2b.

As described above, the sensor 110 according to the embodiment includes the processing device 10 and the transmission/reception device 22. The transmission/reception device 22 emits a pulse wave PW having a first frequency toward the liquid 2 in the container 1. The transmission/reception device 22 receives a reflection wave RW from the liquid surface 3 and outputs a first signal. The first signal corresponds to e.g. the signal S2a. The container 1 includes a part in contact with the liquid 2. The pulse wave PW is incident on the aforementioned contact part. Thus, multiple reflection of the pulse wave PW and the reflection wave RW occurs at the aforementioned contact part.

The processing device 10 can output the strength of the first frequency reflection wave of the first frequency band contained in a second signal and the strength of the second frequency reflection wave of the second frequency band contained in a third signal. The second signal is obtained by subtracting a fourth signal from the first signal. The fourth signal is obtained by integrating the first signal.

That is, the fourth signal contains the DC component of the signal obtained by receiving the reflection wave RW. The fourth signal corresponds to e.g. the signal S3. The second signal contains the AC component of the signal obtained by receiving the reflection wave RW. The second signal corresponds to e.g. the signal S4c. The third signal is obtained by squaring the second signal. That is, the third signal contains the square of the aforementioned AC component. The third signal corresponds to e.g. the signal S5. The first frequency band includes a first frequency. The first frequency is the frequency of the pulse wave PW. The second frequency band is lower than the first frequency band. The second frequency band includes a second frequency. The second frequency is twice the frequency of the multiply-reflected wave.

The display device 24 displays the signal S8 and the signal S9. The display device 24 displays e.g. the temporal change of the strength of the first frequency reflection wave and the temporal change of the strength of the second frequency reflection wave.

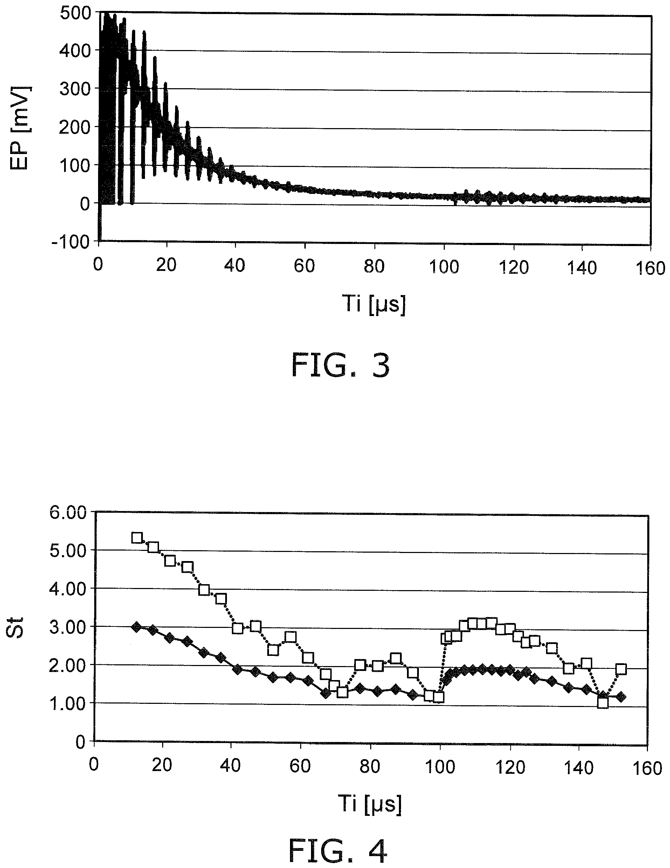

FIGS. 3 and 4 are graphs illustrating a signal processed by the sensor according to the first embodiment.

FIGS. 3 and 4 show a signal obtained in the sensor 110 when a pulse wave is emitted toward the liquid surface through the liquid from the transmission/reception device 22 attached to the outer wall of the container as shown in FIG. 2. In FIG. 3, the vertical axis represents electric potential EP [mV], and the horizontal axis represents time Ti [µs] (microseconds). In FIG. 4, the vertical axis represents strength St, and the horizontal axis represents time Ti [µs]. In FIG. 4, the strength St on the vertical axis is represented logarithmically.

In this example, a pulse wave is emitted from the transmission/reception device 22 at 0 microseconds. The signal shown in FIG. 3 corresponds to one of the signals S4a-S4c. Immediately after the pulse wave is emitted, the potential undergoes a large oscillation. This is presumably because the pulse wave is multiply reflected by the wall of the container, and the transmission/reception device 22 detects this multiply-reflected wave. After 100 microseconds, the potential undergoes a small oscillation. This is presumably because the multiply-reflected wave reflected by the liquid surface is further multiply reflected by the wall of the container, and the transmission/reception device 22 detects this multiply-reflected wave. In this example, the frequency of the pulse wave is 3.5 MHz. The frequency of the multiply-reflected wave is approximately 0.15 MHz. The signal shown in FIG. 4 results from multiplication of the signals S4a and S4b. Thus, the frequency of the multiply-reflected wave is approximately 0.3 MHz.

In FIG. 4, the solid line represents the change of the strength of the first frequency reflection wave of the first frequency band with respect to time Ti. The dotted line represents the change of the strength of the second frequency reflection wave of the second frequency band with respect to time Ti. Near 100 microseconds, the strength of the first frequency reflection wave increases, and the strength of the second frequency reflection wave increases.

The inventors have discovered that the time at which both the strength of the first frequency reflection wave and the strength of the second frequency reflection wave increase corresponds to the distance between the transmission/reception device 22 and the liquid surface. The transmission/reception device 22 is attached to the outer wall of the container. Thus, the distance between the transmission/reception device 22 and the liquid surface substantially represents the position of the liquid surface. A value corresponding to the position of the liquid surface is obtained by multiplying the speed of sound in the liquid by the time interval from the emission of the pulse wave until the strength of the first frequency reflection wave increases and the strength of the second frequency reflection wave increases.

For instance, one can determine the position of the liquid surface by confirming the output result of the sensor 110. According to the embodiment, a signal indicating the position of the liquid surface inside the container with higher accuracy can be outputted even in the case where the sensor is provided outside the container 1.

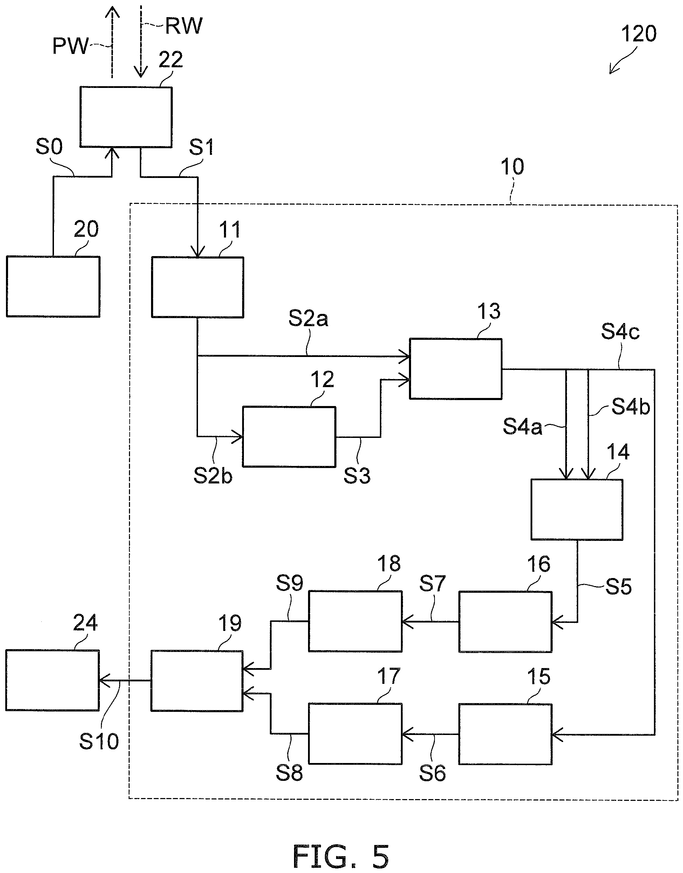

FIG. 5 is a schematic view showing the configuration of an alternative sensor according to the first embodiment.

In the sensor 120, the processing device 10 further includes an analysis section 19. The signal S8 outputted from the first conversion section 17 and the signal S9 outputted from the second conversion section 18 are inputted to the analysis section 19.

A first time instant is defined as the time instant at which the transmission/reception device 22 emits a pulse wave. A second time instant is defined as the time instant at which each of the strength of the first frequency reflection wave and the strength of the second frequency reflection wave increases. The analysis section 19 outputs e.g. a first time interval between the first time instant and the second time instant.

The analysis section 19 may detect a first increase value in a first time period of the strength of the first frequency reflection wave and a second increase value in a second time period of the strength of the second frequency reflection wave. This enables detection of a steeper change of the strength of the first frequency reflection wave and a steeper change of the strength of the second frequency reflection wave. A first time instant is defined as the time instant at which the first increase value exceeds a first threshold. A second time instant is defined as the time instant at which the second increase value exceeds a second threshold. The analysis section 19 outputs a first time interval between the first time instant and the second time instant.

The range of the first time period and the range of the second time period can be determined based on e.g. the calculated strength attenuation rate of the multiply-reflected wave detected by the sensor 110 and the size of the container 1. For instance, in the sensor measuring the waveform shown in FIG. 3, the first time period is set to 60 microseconds or more and 140 microseconds or less. In 60 microseconds or more, the strength is sufficiently attenuated by multiple reflection of 15 times or more. The time of 140 microseconds or less does not exceed the time of reflection from the design upper limit of the water level, 200 mm, of the container. For instance, the second time period is set to 90 microseconds or more and 130 microseconds or less by correcting the width of the sampling time corresponding to the frequency of multiple reflection. The first threshold is e.g. 10% or more and 200% or less of the immediately preceding strength of the first frequency reflection wave. The second threshold is e.g. 20% or more and 500% or less of the immediately preceding strength of the second frequency reflection wave.

The first time interval indicates the distance between the transmission/reception device 22 and the liquid surface 3. The analysis section 19 may output a value corresponding to the position of the liquid surface 3 based on the first time interval.

The signal S10 outputted from the analysis section 19 is displayed on the display device 24. The display device 24 displays e.g. the value corresponding to the position of the liquid surface 3.

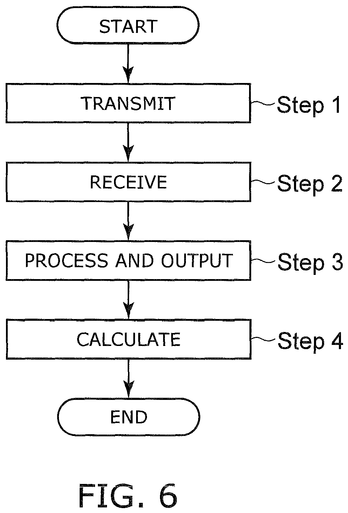

FIG. 6 is a flow chart showing a detection method according to the first embodiment.

The transmission/reception device 22 emits a pulse wave (Step 1). The transmission/reception device 22 receives a reflection wave of the pulse wave transmitted in step 1 (Step 2). The processing device 10 performs processing and outputting of a signal based on the reflection wave received by the transmission/reception device 22. The processing device 10 processes the signal and outputs the temporal change of the strength of the first frequency reflection wave having the first frequency band and the temporal change of the strength of the second frequency reflection wave having the second frequency band (Step 3). This output result is used to calculate the time from the emission of the pulse wave until the strength of the first frequency reflection wave increases and the strength of the second frequency reflection wave increases (Step 4).

The sensor according to the embodiment can be used for e.g. a feed-water heater in a thermal power station.

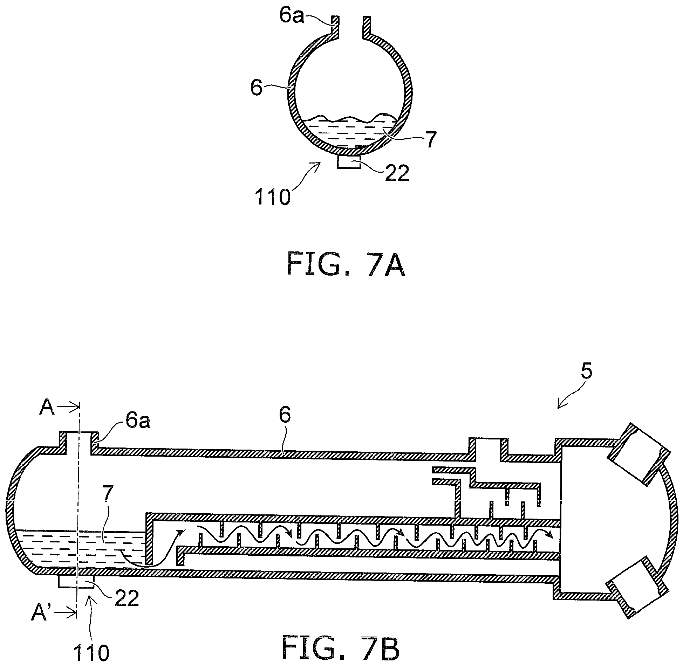

FIGS. 7A and 7B are sectional views showing an alternative usage example of the sensor according to the first embodiment. FIG. 7A is a sectional view taken along line A-A' of FIG. 7B. The example shown in FIGS. 7A and 7B is provided with the sensor 110.

The feed-water heater 5 includes e.g. a water storage section 6. The water storage section 6 contains water 7. The sensor 110 is attached to part of the outer wall of the water storage section 6. The water storage section 6 includes an opening 6a. Drain water flows into the water storage section 6 through the opening 6a. The feed-water heater 5 is constructed from e.g. a thick steel wall of approximately 16-40 mm. The transmission/reception device 22 of the sensor 110 is affixed to part of the outer wall with impedance matching.

The water level (the position of the water surface) of the water 7 is important. The feed-water heater 5 undergoes malfunctions unless the water level falls within an appropriate range. This may result in breakage of the feed-water heater 5. A method for constantly monitoring the water level is to measure the water level indirectly by sensing the pressure of a narrow tube connected to the water storage section 6. This method has room for improvement in the measurement accuracy of the water level.

Another method for measuring the liquid level is to examine the change of the position of a float floated on the liquid surface or the change of buoyancy detected by the float. Another method is to measure the liquid level from the pressure generated in the liquid. Another method is to measure the liquid level from the change of capacitance between electrodes. The measurement of the liquid level using an ultrasonic wave can be performed without opening a hole for measurement in the structure. Thus, the liquid level can be measured from outside a sealed structure.

Consider the case where the position of the liquid surface is measured from the outer surface of a sealed structure through a gas phase such as air. In this case, a possible method for measuring the liquid level based on an ultrasonic wave is to oscillate a pulse wave in the direction normal to the water surface and to calculate the propagation distance of the ultrasonic wave from its propagation time and propagation speed. In this method, for instance, an ultrasonic wave is transmitted/received from the bottom part of the structure. Through the intermediary of the plate thickness of the structure, the pulse wave is propagated in the water. The pulse wave is reflected by the water surface, and the reflection wave is detected. In this method, the echo of multiple reflection of the ultrasonic wave is generated by the wall of the structure, and it is difficult to distinguish this reflected signal by the water surface. Furthermore, under the condition that a large number of air bubbles exist in the liquid, reflection from the air bubbles constitutes noise and makes it difficult to distinguish the reflection wave reflected by the liquid surface.

Another possible method is to arrange a plurality of ultrasonic sensors on the side surface of the structure. In this method, the water level is measured from the attenuation amount of the echo of multiple reflection of the ultrasonic wave. This method can measure the water level at the position on the wall surface. However, when waves exist in the liquid inside the container, it is difficult to measure the water level at a position away from the wall. For instance, in the feed-water heater 5 of a thermal power station, faulty measurement of the water level position at the water intake opening may lead to a fatal breakdown.

The sensor according to the embodiment can output a signal indicating the position of the water surface of the water 7 inside the water storage section 6 with higher accuracy. Thus, the position of the water surface can be determined with higher accuracy.

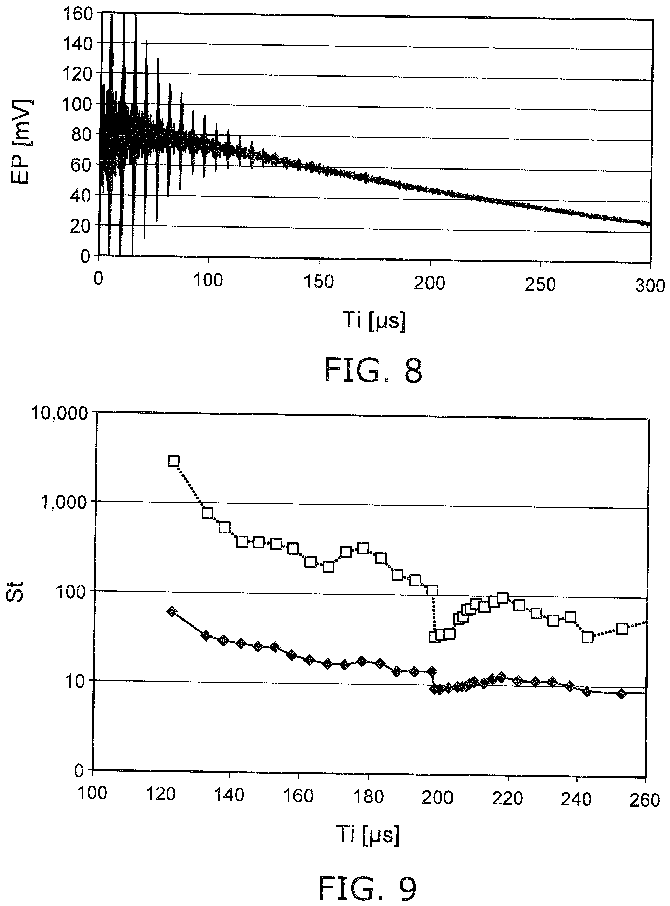

FIGS. 8 and 9 are graphs illustrating an alternative signal processed by the sensor according to the first embodiment.

Like the example of FIGS. 3 and 4, FIGS. 8 and 9 show a signal obtained in the sensor 110 provided outside the container when a pulse wave is emitted toward the liquid surface through the liquid. In this example, the pulse wave is emitted in the state in which a large number of air bubbles exist in the liquid. In FIG. 8, the vertical axis represents electric potential EP [mV], and the horizontal axis represents time Ti [µs]. In FIG. 9, the vertical axis represents strength St, and the horizontal axis represents time Ti [µs]. In FIG. 9, the strength St on the vertical axis is represented logarithmically.

As shown in FIG. 8, until approximately 120 microseconds, the potential undergoes a large oscillation. This is presumably based on multiple reflection at the wall of the container. After approximately 120 microseconds, the potential continually undergoes a small oscillation. This is presumably because the pulse wave is reflected and scattered by air bubbles in the liquid.

In FIG. 9, the solid line represents the change of the strength of the first frequency reflection wave of the first frequency band with respect to time Ti. The dotted line represents the change of the strength of the second frequency reflection wave of the second frequency band with respect to time Ti. After 200 microseconds, the strength of the first frequency reflection wave and the strength of the second frequency reflection wave both increase.

As shown in FIG. 9, at approximately 205 microseconds, the strength of the first frequency reflection wave increases, and the strength of the second frequency reflection wave increases. It has been confirmed that this time corresponds to the position of the liquid surface in the container. The result of FIGS. 8 and 9 indicates that the position of the liquid surface can be detected with high accuracy based on the temporal change of the strength of the first frequency reflection wave and the temporal change of the strength of the second frequency reflection wave.

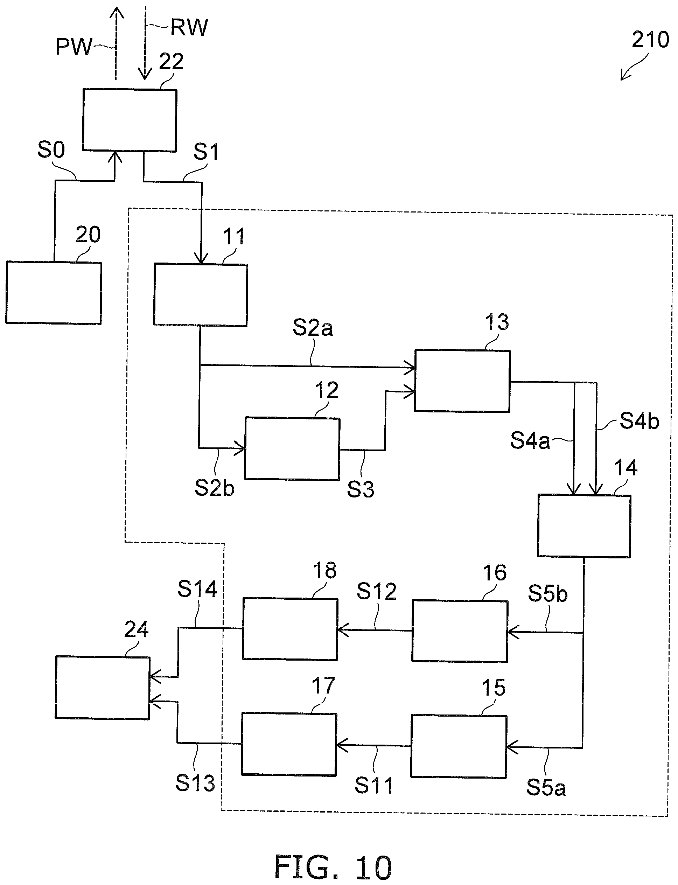

FIG. 10 is a schematic view illustrating the configuration of a sensor according to a second embodiment.

In the sensor 210, the signal outputted from the analog integrated circuit 14 is branched into signals S5a and S5b.

The first band-pass filter 15 passes the signal S11 of a third frequency band out of the signal S5a. The second band-pass filter 16 passes the signal S12 of a fourth frequency band out of the signal S5b. The third frequency band includes a second frequency. The second frequency is twice the frequency of the multiply-reflected wave. The fourth frequency band includes a third frequency. The third frequency is an integer multiple of the second frequency. The signal S11 includes a signal corresponding to the fundamental component contained in the multiply-reflected wave. The signal S12 includes a signal corresponding to the harmonic component contained in the multiply-reflected wave.

The signal S11 is inputted to the first conversion section 17. The first conversion section 17 converts the analog signal S11 to a digital signal S13. The signal S12 is inputted to the second conversion section 18. The second conversion section 18 converts the analog signal S12 to a digital signal S14.

In the sensor 210, the processing device 10 can output the strength of the third frequency reflection wave of the third frequency band contained in the signal S5a and the strength of the fourth frequency reflection wave of the fourth frequency band contained in the signal S5b. The signal S5a and S5b are obtained by multiplying the signal S4a by S4b. The signal S4a is obtained by subtracting the signal S3 from the signal S2a. The signal S3 is obtained by integrating the signal S2b.

The display device 24 displays the signal S13 and the signal S14. The display device 24 displays e.g. the temporal change of the strength of the third frequency reflection wave and the temporal change of the strength of the fourth frequency reflection wave.

In the sensor 210, the processing device 10 may further include an analysis section 19 as in the sensor 120 shown in FIG. 5.

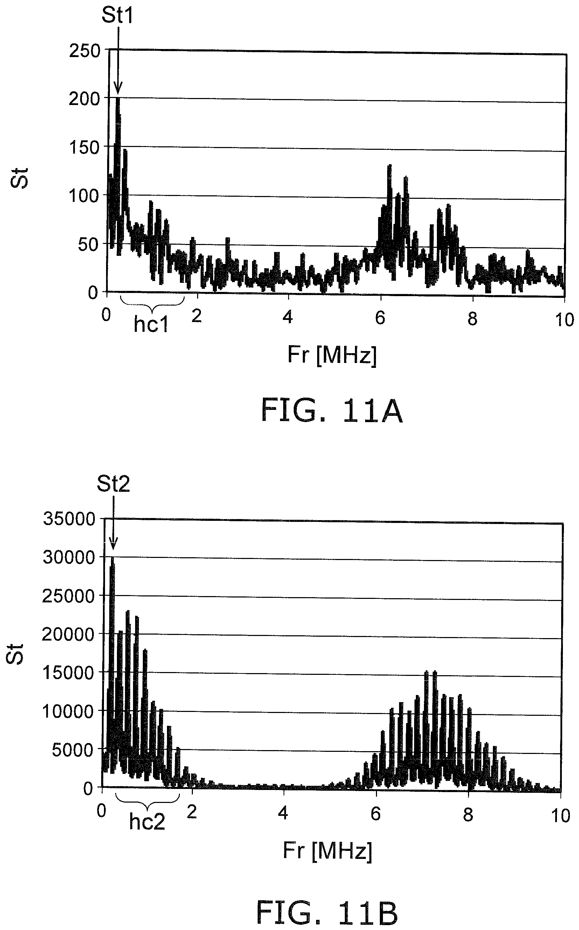

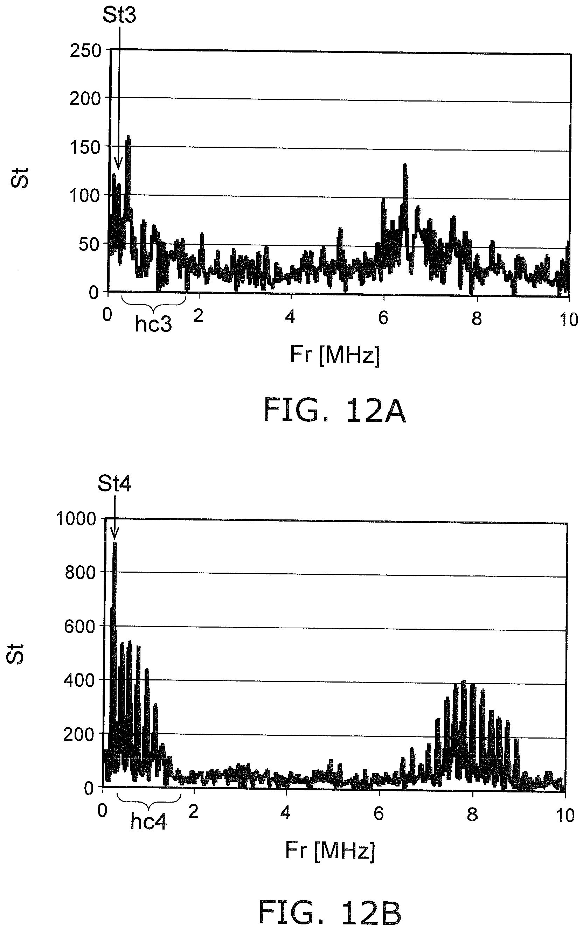

FIGS. 11A, 11B, 12A, and 12B are graphs illustrating signals processed by the sensor according to the second embodiment.

FIGS. 11A and 11B show the result of an experiment performed using liquid in a first state. FIGS. 12A and 12B show the result of an experiment performed using liquid in a second state. The number of air bubbles in the liquid in the second state is larger than the number of air bubbles in the liquid in the first state.

In FIGS. 11A, 11B, 12A, and 12B, the horizontal axis represents frequency Fr [MHz], and the vertical axis represents the strength St of the signal. FIGS. 11A and 12A show signals based on a first acoustic wave produced from the pulse wave reflected in the liquid. FIGS. 11B and 12B show signals based on a second acoustic wave produced from the pulse wave reflected by the liquid surface.

In this example, the frequency of the pulse wave is 3.5 MHz. The frequency of the multiply-reflected wave is 0.15 MHz. In the graphs shown in FIGS. 11A, 11B, 12A, and 12B, the frequency of 0.15 MHz corresponds to the frequency of the fundamental of the multiply-reflected wave.

In FIG. 11A, the strength St1 represents the strength of the fundamental of the multiply-reflected wave contained in the first acoustic wave. The component hc1 represents the harmonic component of the multiply-reflected wave contained in the first acoustic wave. The harmonic component of the multiply-reflected wave is obtained by e.g. integrating the strength of the harmonic of the multiply-reflected wave.

In FIG. 11B, the strength St2 represents the strength of the fundamental of the multiply-reflected wave contained in the second acoustic wave. The component hc2 represents the harmonic component of the multiply-reflected wave contained in the second acoustic wave.

The result of FIGS. 11A and 11B indicates that the harmonic component hc2 of the multiply-reflected wave contained in the second acoustic wave is larger than the harmonic component hc1 of the multiply-reflected wave contained in the first acoustic wave.

In FIG. 12A, the strength St3 represents the strength of the fundamental of the multiply-reflected wave contained in the first acoustic wave. The component hc3 represents the harmonic component of the multiply-reflected wave contained in the first acoustic wave. The harmonic component of the multiply-reflected wave is obtained by e.g. integrating the strength of the harmonic of the multiply-reflected wave.

In FIG. 12B, the strength St4 represents the strength of the fundamental of the multiply-reflected wave contained in the second acoustic wave. The component hc4 represents the harmonic component of the multiply-reflected wave contained in the second acoustic wave.

The result of FIGS. 12A and 12B indicates that the harmonic component hc4 of the multiply-reflected wave contained in the second acoustic wave is larger than the harmonic component hc3 of the multiply-reflected wave contained in the first acoustic wave.

The result of FIGS. 11A, 11B, 12A, and 12B indicates that the position of the liquid surface can be detected irrespective of the number of air bubbles in the liquid by examining the temporal change of the ratio of the harmonic component of the multiply-reflected wave to the strength of the fundamental of the multiply-reflected wave.

In the sensor 210, the processing device 10 outputs the signal S12. The processing device 10 can output the temporal change of the strength of the harmonic of the multiply-reflected wave. The position of the liquid surface of the liquid containing air bubbles can be determined with high accuracy from the output result of the processing device 10. The sensor 210 may output the time from the emission of the pulse wave until the strength of the harmonic of the multiply-reflected wave increases. The sensor 210 may output the time from the emission of the pulse wave until the ratio of the strength of the harmonic of the multiply-reflected wave to the strength of the fundamental of the multiply-reflected wave increases. The sensor 210 may output a value corresponding to the position of the liquid surface 3.

In the example shown in FIG. 10, the processing device 10 outputs the signal S11. The processing device 10 may not output the signal S11. The processing device 10 only needs to output the signal S12 for the purpose of determining the position of the liquid surface.

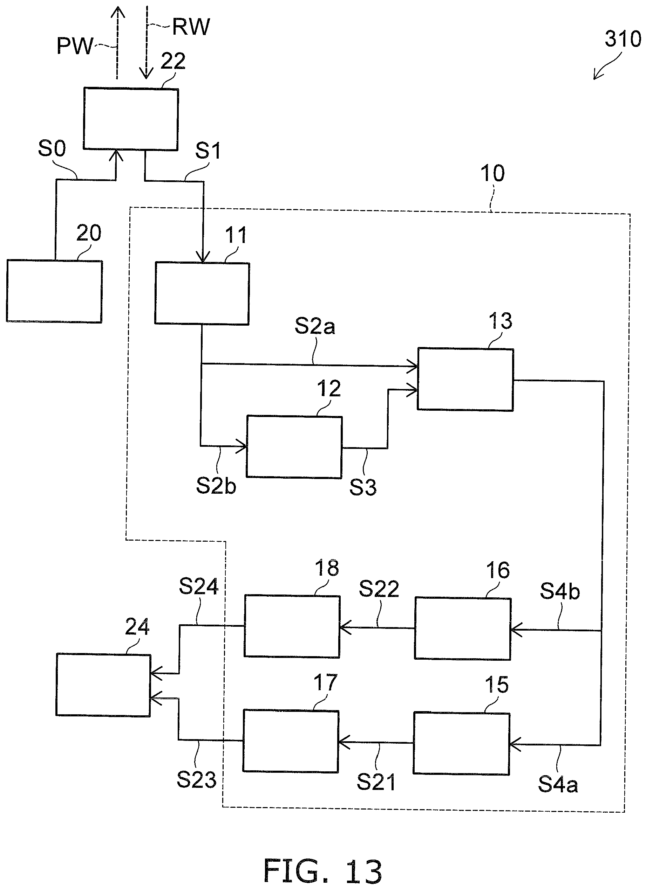

FIG. 13 is a schematic view illustrating the configuration of a sensor according to a third embodiment.

In the sensor 310, the signal outputted from the differential amplifier 13 is branched into signals S4a and S4b.

The first band-pass filter 15 passes the signal S21 of a fifth frequency band out of the signal S4a. The second band-pass filter 16 passes the signal S22 of a sixth frequency band out of the signal S4b. The fifth frequency band includes the first frequency. The sixth frequency band includes a fourth frequency. The fourth frequency is higher than the first frequency. For instance, the difference between the fourth frequency and the first frequency is one or more and eight or less times the frequency of the multiply-reflected wave.

The signal S21 is inputted to the first conversion section 17. The first conversion section 17 converts the analog signal S21 to a digital signal S23. The signal S22 is inputted to the second conversion section 18. The second conversion section 18 converts the analog signal S22 to a digital signal S24. The display device 24 displays the signal S23 and the signal S24.

In the sensor 310, the processing device 10 can output the strength of the fifth frequency reflection wave of the fifth frequency band contained in the signal S4a and the strength of the sixth frequency reflection wave of the sixth frequency band contained in the signal S4b. The signal S4a is obtained by subtracting the signal S3 from the signal S2a. The signal S3 is obtained by integrating the signal S2b.

In the sensor 310, the processing device 10 may further include an analysis section 19 as in the sensor 120 shown in FIG. 5.

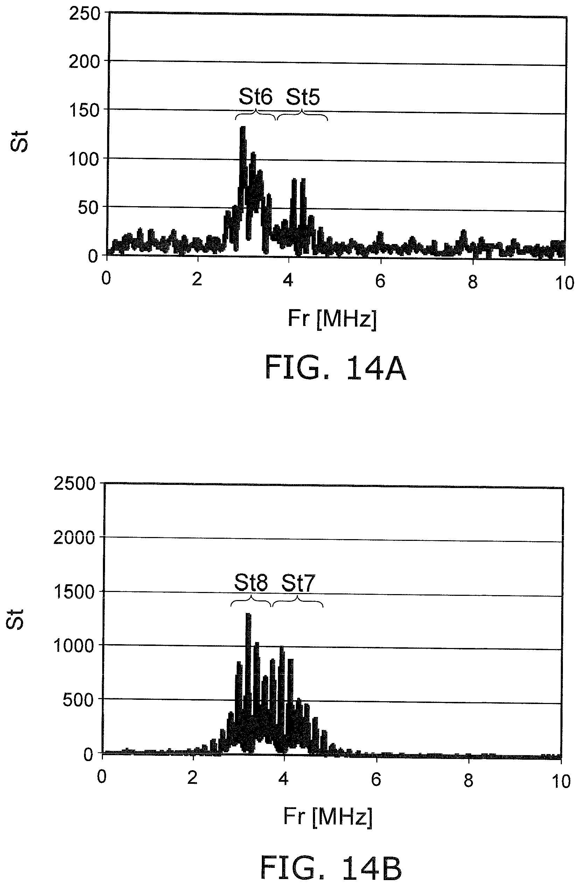

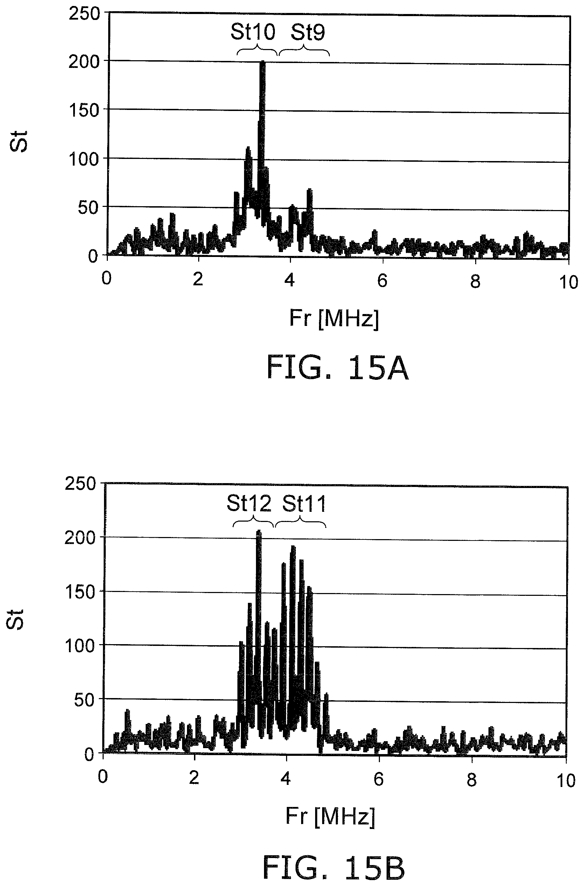

FIGS. 14A, 14B, 15A, and 15B are graphs illustrating signals processed by the sensor according to the third embodiment.

FIGS. 14A and 14B show the result of an experiment performed using liquid in the first state. FIGS. 15A and 15B show the result of an experiment performed using liquid in the second state. The number of air bubbles in the liquid in the second state is larger than the number of air bubbles in the liquid in the first state.

In FIGS. 14A, 14B, 15A, and 15B, the horizontal axis represents frequency Fr [MHz], and the vertical axis represents the strength St of the signal. FIGS. 14A and 15A show signals based on a third acoustic wave produced from the pulse wave reflected in the liquid. FIGS. 14B and 15B show signals based on a fourth acoustic wave produced from the pulse wave reflected by the liquid surface. In this example, the frequency of the pulse wave is 3.5 MHz.

As shown in FIG. 14A, the strength St5 of the sixth frequency reflection wave of the sixth frequency band contained in the third acoustic wave is smaller than the strength St6 of the fifth frequency reflection wave of the fifth frequency band contained in the third acoustic wave.

As shown in FIG. 14B, the strength St7 of the sixth frequency reflection wave of the sixth frequency band contained in the fourth acoustic wave is smaller than the strength St8 of the fifth frequency reflection wave of the fifth frequency band contained in the fourth acoustic wave.

The result of FIGS. 14A and 14B indicates that the strength St7 is relatively larger than the strength St5.

The result of FIGS. 14A and 14B indicates that the ratio of the strength St7 to the strength St8 (St7/St8) is clearly larger than the ratio of the strength St5 to the strength St6 (St5/St6).

As shown in FIG. 15A, the strength St9 of the sixth frequency reflection wave of the sixth frequency band contained in the third acoustic wave is smaller than the strength St10 of the fifth frequency reflection wave of the fifth frequency band contained in the third acoustic wave.

As shown in FIG. 15B, the strength St12 of the fifth frequency reflection wave of the fifth frequency band contained in the fourth acoustic wave is slightly smaller than the strength St11 of the sixth frequency reflection wave of the sixth frequency band contained in the fourth acoustic wave.

The result of FIGS. 15A and 15B indicates that the strength St11 is larger than the strength St9.

The result of FIGS. 15A and 15B indicates that the ratio of the strength St11 to the strength St12 (St11/St12) is larger than the ratio of the strength St9 to the strength St10 (St9/St10.

The result of FIGS. 14A, 14B, 15A, and 15B indicates that the position of the liquid surface can be detected irrespective of the number of air bubbles in the liquid by examining the temporal change of the strength of the acoustic wave of the sixth frequency band.

The result of FIGS. 14A, 14B, 15A, and 15B indicates that the position of the liquid surface can be detected irrespective of the number of air bubbles in the liquid by examining the temporal change of the ratio of the strength of the acoustic wave of the sixth frequency band to the strength of the acoustic wave of the fifth frequency band.

In the sensor 310, the processing device 10 outputs the signal S22. The processing device 10 can output the temporal change of the strength of the acoustic wave having the fourth frequency. The position of the liquid surface of the liquid containing air bubbles can be determined with high accuracy from the output result of the processing device 10. The sensor 310 may output the time from the emission of the pulse wave until the strength of the acoustic wave having the fourth frequency increases. The sensor 310 may output the time from the emission of the pulse wave until the ratio of the strength of the acoustic wave having the fourth frequency to the strength of the acoustic wave having the first frequency increases. The sensor 310 may output a value corresponding to the position of the liquid surface 3.

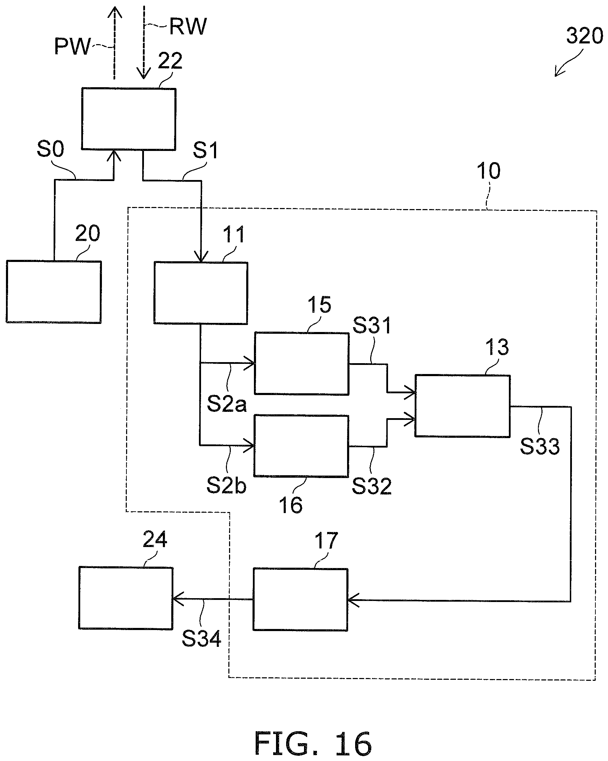

FIG. 16 is a schematic view showing the configuration of an alternative sensor according to the third embodiment.

In the sensor 320, the signal amplified by the reception amplifier 11 is branched into signals S2a and S2b. The signal S2a is inputted to the first band-pass filter 15, which outputs a signal S31 of the fifth frequency band. The signal S2b is inputted to the second band-pass filter 16, which outputs a signal S32 of the sixth frequency band.

The signals S31 and S32 are inputted to the differential amplifier 13. The differential amplifier 13 outputs a signal S33. The first conversion section 17 converts the analog signal S33 to a digital signal S34. The signal S34 includes the strength of the fifth frequency reflection wave of the fifth frequency band and the strength of the sixth frequency reflection wave of the sixth frequency band.

The display device 24 displays the signal S34. The display device 24 displays e.g. the temporal change of the strength of the fifth frequency reflection wave and the temporal change of the strength of the sixth frequency reflection wave.

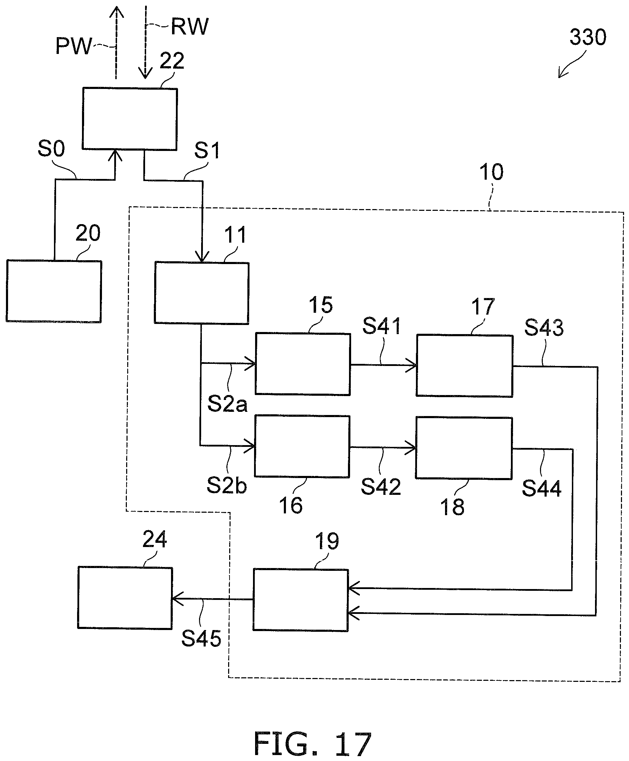

FIG. 17 is a schematic view showing the configuration of an alternative sensor according to the third embodiment.

In the sensor 330, the signal S2a is inputted to the first band-pass filter 15, which outputs a signal S41 of the fifth frequency band. The signal S2b is inputted to the second band-pass filter 16, which outputs a signal S42 of the sixth frequency band.

The first conversion section 17 converts the analog signal S41 to a digital signal S43. The second conversion section 18 converts the analog signal S42 to a digital signal S44. The signal S43 includes the strength of the fifth frequency reflection wave of the fifth frequency band. The signal S44 includes the strength of the sixth frequency reflection wave of the sixth frequency band. The signals S43 and S44 are inputted to the analysis section 19. The analysis section 19 outputs a signal S45 including a value corresponding to the position of the liquid surface based on e.g. the temporal change of the strength of the fifth frequency reflection wave and the temporal change of the strength of the sixth frequency reflection wave.

The display device 24 outputs the signal S45. The display device 24 displays e.g. the value corresponding to the position of the liquid surface.

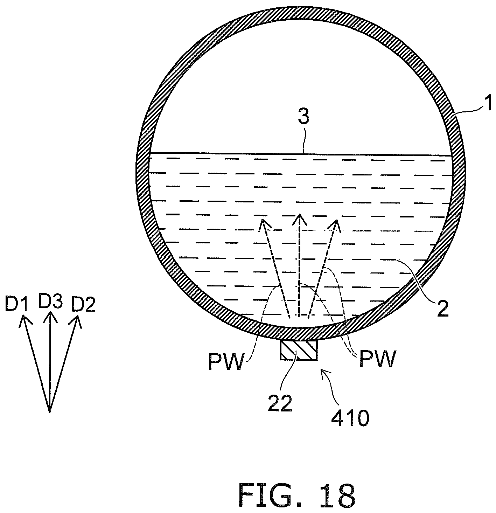

FIG. 18 is a sectional view showing a sensor according to a fourth embodiment.

The sensor 410 changes the transmission direction of the pulse wave PW over time.

For instance, the transmission/reception device 22 of the sensor 410 transmits a pulse wave PW along a first direction toward the liquid surface 3 at a first time instant. The first direction lies along e.g. the direction D1 shown in FIG. 18. The transmission/reception device 22 transmits a pulse wave PW along a second direction crossing the first direction toward the liquid surface 3 at a third time instant. The second direction lies along e.g. the direction D2 shown in FIG. 18.

The transmission/reception device 22 may transmit a pulse wave PW along a third direction toward the liquid surface 3 at a fourth time instant between the first time instant and the third time instant. The third direction crosses the first direction and the second direction and lies along the plane including the first direction and the second direction. The third direction lies along e.g. the direction D3 shown in FIG. 18.

The transmission/reception device 22 of the sensor 410 receives a reflection wave RW of the pulse wave PW. For instance, like the sensor 110, the sensor 410 outputs the strength of the first frequency reflection wave of the first frequency band and the strength of the second frequency reflection wave of the second frequency band. The sensor 410 may output a processing result like that of the sensor according to the second embodiment or the third embodiment.

The transmission/reception device 22 includes e.g. a transmission/reception region for transmitting a pulse wave PW along the first direction and another transmission/reception region for transmitting a pulse wave PW along the second direction. The sensor 410 drives these transmission/reception regions at different timings. Thus, the transmission direction of the pulse wave PW changes over time.

The sensor 410 may include a mechanism for driving the transmission/reception device 22. The transmission direction of the pulse wave PW can be changed over time by driving the transmission/reception device 22.

The sensor and the detection method according to the above embodiments can output a signal indicating the position of the surface of the liquid in a container with higher accuracy.

In the specification of the application, "perpendicular" and "parallel" refer to not only strictly perpendicular and strictly parallel but also include, for example, the fluctuation due to manufacturing processes, etc. It is sufficient to be substantially perpendicular and substantially parallel. Hereinabove, embodiments of the invention are described with reference to specific examples. However, the invention is not limited to these specific examples. For example, one skilled in the art may similarly practice the invention by appropriately selecting specific configurations of components such as the processing device 10, the transmission/reception device 22, the display device 24, etc., from known art; and such practice is within the scope of the invention to the extent that similar effects can be obtained.

Further, any two or more components of the specific examples may be combined within the extent of technical feasibility and are included in the scope of the invention to the extent that the purport of the invention is included.

Moreover, all sensors and detection methods practicable by an appropriate design modification by one skilled in the art based on the sensors and the detection methods described above as embodiments of the invention also are within the scope of the invention to the extent that the spirit of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. A sensor (110) comprising:
a transmission/reception (22) device configured to emit a pulse wave having a first frequency toward liquid in a container, to receive a reflection wave of the pulse wave, and to output a first signal, the container including a part in contact with the liquid, and the pulse wave being incident on the part; and
a processing device (10) capable of outputting strength of a first frequency reflection wave of a first frequency band contained in a second signal and strength of a second frequency reflection wave of a second frequency band contained in a third signal, the third signal being obtained by squaring the second signal, the second signal being obtained by subtracting a fourth signal from the first signal, the fourth signal being obtained by integrating the first signal, the first frequency band including the first frequency, and the second frequency band being lower than the first frequency band.

2. The sensor according to claim 1, wherein
the second frequency band includes a second frequency, and
the second frequency is twice a frequency of a multiply-reflected wave at the part of the pulse wave.

3. The sensor according to claim 1 or 2, wherein
the processing device (10) detects a first increase value in a first time period of the strength of the first frequency reflection wave and a second increase value in a second time period of the strength of the second frequency reflection wave,
the processing device (10) outputs a first time interval between a first time instant and a second time instant,
the pulse wave is emitted from the transmission/reception device at the first time instant, and
at the second time instant, the first increase value exceeds a first threshold, and the second increase value exceeds a second threshold.

4. A sensor (110) comprising:
a transmission/reception device (22) configured to emit a pulse wave having a first frequency toward liquid in a container, to receive a reflection wave of the pulse wave, and to output a first signal, the container including a part in contact with the liquid, and the pulse wave being incident on the part; and
a processing device (10) capable of outputting strength of a third frequency reflection wave of a third frequency band contained in a third signal and strength of a fourth frequency reflection wave of a fourth frequency band contained in the third signal, the third signal being obtained by squaring a second signal, the second signal being obtained by subtracting a fourth signal from the first signal, the fourth signal being obtained by integrating the first signal, the fourth frequency band including a third frequency, the third frequency being an integer multiple of a second frequency, the third frequency band including the second frequency, and the second frequency being twice a frequency of a multiply-reflected wave at the part of the pulse wave.

5. The sensor according to claim 4, wherein
the processing device (10) detects a first increase value in a first time period of the strength of the fourth frequency reflection wave,
the processing device (10) outputs a first time interval between a first time instant and a second time instant,
the pulse wave is emitted from the transmission/reception device at the first time instant, and
at the second time instant, the first increase value exceeds a first threshold.

6. A sensor (110) comprising:
a transmission/reception device (22) configured to emit a pulse wave having a first frequency toward liquid in a container, to receive a reflection wave of the pulse wave, and to output a first signal, the container including a part in contact with the liquid, and the pulse wave being incident on the part; and
a processing device (10) capable of outputting strength of a fifth frequency reflection wave of a fifth frequency band contained in a second signal and strength of a sixth frequency reflection wave of a sixth frequency band contained in the second signal, the second signal being obtained by subtracting a fourth signal from the first signal, the fourth signal being obtained by integrating the first signal, the fifth frequency band including the first frequency, and the sixth frequency band being higher than the fifth frequency band.

7. The sensor according to claim 6, wherein
the sixth frequency band includes a fourth frequency higher than the first frequency, and
difference between the fourth frequency and the first frequency is one or more and eight or less times a frequency of a multiply-reflected wave at the part of the pulse wave.

8. The sensor according to claim 6 or 7, wherein
the processing device (10) detects a first increase value in a first time period of the strength of the sixth frequency reflection wave,
the processing device (10) outputs a first time interval between a first time instant and a second time instant,
the pulse wave is emitted from the transmission/reception device at the first time instant, and
at the second time instant, the first increase value exceeds a first threshold.

9. The sensor according to any one of claims 1 to 8, wherein
the transmission/reception device (22) emits the pulse wave along a first direction toward a surface of the liquid at a first time instant, and
the transmission/reception device (22) emits another pulse wave along a second direction crossing the first direction toward the surface of the liquid at a third time instant.

10. A detection method comprising:
emitting a pulse wave having a first frequency toward liquid in a container, the container including a part in contact with the liquid, and the pulse wave being incident on the part;
receiving a reflection wave of the pulse wave and outputting a first signal;
outputting strength of a first frequency reflection wave of a first frequency band contained in a second signal and strength of a second frequency reflection wave of a second frequency band contained in a third signal, the third signal being obtained by squaring the second signal, the second signal being obtained by subtracting a fourth signal from the first signal, and the fourth signal being obtained by integrating the first signal; and
obtaining a first time interval from emission of the pulse wave until the strength of the first frequency reflection wave increases and the strength of the second frequency reflection wave increases.

11. A detection method comprising:
emitting a pulse wave having a first frequency toward liquid in a container, the container including a part in contact with the liquid, and the pulse wave being incident on the part;
receiving a reflection wave of the pulse wave and outputting a first signal;
outputting strength of a third frequency reflection wave of a third frequency band contained in a third signal and strength of a fourth frequency reflection wave of a fourth frequency band contained in the third signal, the third signal being obtained by squaring a second signal, the second signal being obtained by subtracting a fourth signal from the first signal, the fourth signal being obtained by integrating the first signal, the fourth frequency band including a third frequency, the third frequency being an integer multiple of a second frequency, the third frequency band including the second frequency, and the second frequency being twice a frequency of a multiply-reflected wave at the part of the pulse wave; and
obtaining a first time interval from emission of the pulse wave until the strength of the fourth frequency reflection wave increases.

12. A detection method comprising:
emitting a pulse wave having a first frequency toward liquid in a container, the container including a part in contact with the liquid, and the pulse wave being incident on the part;
receiving a reflection wave of the pulse wave and outputting a first signal;
outputting strength of a fifth frequency reflection wave of a fifth frequency band contained in a second signal and strength of a sixth frequency reflection wave of a sixth frequency band contained in the second signal, the second signal being obtained by subtracting a fourth signal from the first signal, the fourth signal being obtained by integrating the first signal, the fifth frequency band including the first frequency, and the sixth frequency band being higher than the fifth frequency band; and
obtaining a first time interval from emission of the pulse wave until the strength of the sixth frequency reflection wave increases.
